# EUROPEAN PATENT SPECIFICATION

(11) **EP 3 887 985 B1**
(45) Date of publication and mention of the grant of the patent: **15.10.2025**
(21) Application number: 19816923.7
(22) Date of filing: 27.11.2019
(51) Int. Cl.: G06F 21/54, G06F 21/56

(54) **MALICIOUS CODE PROTECTION FOR COMPUTER SYSTEMS BASED ON SYSTEM CALL TABLE MODIFICATION AND RUNTIME APPLICATION PATCHING**
SCHUTZ VOR BÖSARTIGEM CODE FÜR COMPUTERSYSTEME AUF BASIS VON SYSTEMANRUFTABELLENMODIFIZIERUNG UND LAUFZEITANWENDUNGSPATCHING
PROTECTION CONTRE LES CODES MALVEILLANTS POUR SYSTÈMES INFORMATIQUES SUR LA BASE D'UNE MODIFICATION DE TABLE D'APPELS DE SYSTÈME ET D'UNE CORRECTION D'APPLICATION D'EXÉCUTION

(30) Priority: 30.11.2018 US 201862773706 P
(43) Date of publication of application: 06.10.2021
(73) Proprietor: Morphisec Information Security 2014 Ltd, Beer-Sheva 8470912 (IL)
(72) Inventor: TSECHANSKI, Nathaniel, Cambridge, Massachusetts 02141 (US); GORELIK, Michael, West Newton, Massachusetts 02465 (US); GURI, Mordechai, 9978500 Nof Ayalon (IL)
(74) Representative: Marks & Clerk LLP
(86) International application number: PCT/IB2019/060262
(87) International publication number: WO 2020/110053

(56) References cited:
- US-A1- 2017 177 314
- US-B1- 6 658 571
- XUXIAN JIANG ET AL: "RandSys: Thwarting Code Injection Attacks with System Service Interface Randomization", RELIABLE DISTRIBUTED SYSTEMS, 2007. SRDS 2007. 26TH IEEE INTERNATIONAL SYMPOSIUM ON, IEEE, PISCATAWAY, NJ, USA, 10 October 2007 (2007-10-10), pages 209 - 218, XP031572964, ISBN: 978-0-7695-2995-0

## Description

### BACKGROUND

### Technical Field

Embodiments described herein generally relate to detecting and/or neutralizing malicious code or other security threats on computer systems.

### Description of Related Art

Modern cyber attackers employ a variety of attack patterns, ultimately aimed at running the attacker's code on the target machine without being noticed. The traditional attack pattern requires an executable file that arrives at the target machine through email, through a download from a website, from a neighboring local host, or from some sort of removable media. When the malicious file gets executed, it spawns a full-fledged process of its own. Subsequently, the malicious process may inject some form of code into the memory-space of another running process.

Newer attack patterns are based on vulnerabilities found in various useful programs, such as ADOBE^{®} ACROBAT^{®}. In the case of ADOBE^{®} ACROBAT^{®}, the malicious code (or "payload") is embedded within a portable data file (PDF) document. The PDF document also contains a chunk of malformed data, designed to exploit the given vulnerability. This chunk is crafted to cause some kind of overflow or similar exception when the file is being read by the vulnerable program. When the program or the operating system seeks to recover, it returns, instead, to a tiny piece of machine code (or primary shellcode) supplied by the malformed data chunk. This primary shellcode takes control of the running program (i.e., the process), completing the so-called "exploit" of the given vulnerability. Subsequently, the primary shellcode loads whatever payload (special-purpose malicious code) is available, into the context of the running process.

In a so-called 'remote' attack, the vulnerable program is associated with some network port, either as a server or as a client. The exploit happens when the vulnerable program tries to process a chunk of malformed input, essentially in the same manner as described above. In this case, when the primary shellcode takes control of the running process, it may choose to download secondary shellcode or payload from the network. In both the local and the remote vulnerability-based attacks, the malicious code running within the originally breached process may proceed by injecting code into the running processes of other programs.

Traditional malware-detection tools, such as signature-based antivirus products, are ineffective against such attacks due to the fact these attacks take form in memory, thereby resulting in no visible signature for the malicious file. Conventional runtime activity monitoring, based on the behavioral patterns of such attacks, fail to defend against attacks due to the fact that such attacks morph themselves and change their behavior, thereby making it difficult to define strict rules that lead to the identification of malicious behavior. Accordingly, conventional runtime activity monitoring has some major drawbacks, including: (a) it may miss a new, unknown pattern; (b) detection may occur too late for the monitoring program to take an effective preventive action; and (c) the required computational resources may affect the system's performance. In general, these tools rely on some prior knowledge of an attack pattern or a vulnerability, and will miss so-called "zero-day" attacks (new forms of attack, which exploit unknown vulnerabilities in the target software), whether the attack is remote or local.

Protective techniques such as Address Space Layout Randomization (ASLR) and Data Execution Prevention (DEP) are used in modern computerized systems to prevent malicious-code attacks. However, recent sophisticated attacks, such as attacks that are able to deduce the location of desired functionality based on relative addressing, have demonstrated the limitations of ASLR and DEP. US2017/177314 describes a method that includes generating, by a computing system, first unique configuration information, generating, by the computing system and based on the first unique configuration information, a first unique instance of a software component, generating second unique configuration information, wherein the second unique configuration information is different from the first unique configuration information, and generating, based on the second unique configuration information, a second unique instance of the software component that is executable on the runtime computing system. The first and second unique instances of the software component comprise different instances of the same software component that each are configured to have uniquely different operating characteristics during execution on the runtime computing system. XUXIAN JIANG ET AL: "RandSys: Thwarting Code Injection Attacks with System Service Interface Randomization", RELIABLE DISTRIBUTED SYSTEMS, 2007. SRDS 2007. 26TH IEEE INTERNATIONAL SYMPOSIUM ON, IEEE, PISCATAWAY, NJ, USA, 10 October 2007 (2007-10-10), pages 209-218, describes a system, RandSys, which uses system call instruction randomization and the general technique of ASLR to thwart code injection attacks. US6658571 B1 describes a security framework that includes a security master that coordinates installation and removal of kernel-based security modules and that provides a means for managing these modules. The security module are loadable kernel modules that include security information for enforcing application-specific or resource-specific policies.

### BRIEF SUMMARY

Aspects of the present disclosure are as set out in the accompanying claims.

### BRIEF DESCRIPTION OF THE DRAWINGS

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 depicts components of a computer system in accordance with an embodiment.
FIG. 2 depicts a system call table in accordance with an example embodiment.
FIG. 3 is a block diagram of a system for morphing and duplicating a system call table in accordance with an example embodiment.
FIG. 4 is a block diagram of a system call table that has been modified with traps in accordance with an embodiment.
FIG. 5 is a block diagram of a system call table that has been modified to include randomized index numbers in accordance with an embodiment
FIG. 6 depicts a flowchart of an example method for protecting a computer system from malicious processes in accordance with an example embodiment.
FIG. 7 is a block diagram of a system for patching an application to utilize a shadow system call table in accordance with an example embodiment.
FIG. 8 depicts a flowchart of a method for patching an application in accordance with an example embodiment.
FIG. 9 depicts a flowchart of a method for determining locations in code of the application to be patched in accordance with an example embodiment.
FIG. 10 depicts a block diagram of a computer system that may be configured to perform techniques disclosed herein.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The following detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the art to implement such feature, structure, or characteristic in connection with other embodiments whether or not explicitly described.

Numerous exemplary embodiments are now described. Any section/subsection headings provided herein are not intended to be limiting. Embodiments are described throughout this document, and any type of embodiment may be included under any section/subsection. Furthermore, it is contemplated that the disclosed embodiments may be combined with each other in any manner.

### II. Example Embodiments

Malicious code (e.g., malware), including injected shellcode, relies on some system functions provided by an operating system to perform its exploits. In general, malicious code call such functions explicitly, rather than using wrappers provided by system libraries, such as libc, in order conserve space.

Various approaches are described herein for, among other things, neutralizing and/or detecting attacks by such malicious code. This may be achieved, for example, by modifying (or "morphing") certain aspects of an operating system. For example, a system call table storing pointers to system functions may be duplicated to create a shadow system call table. The original system call table may be modified with traps that result in the neutralization of processes that call protected system functions via the original system call table, whereas processes that call protected system functions via the shadow system call table are enabled to execute properly. In order for valid applications to operate with the shadow system call table, index numbers corresponding to the different system function calls may be randomized in a system library that maintains function calls to such system functions. Valid applications may be patched in order to reference such randomized index numbers. During execution of such applications, a hooking function located at the system call entry point, determines whether a system function call utilizes the randomized index number. If so, the flow of execution is routed to the shadow system call table. If not, the flow of execution is routed to the original system call table containing the traps. Thus, valid application processes correctly reference the requested system calls. In contrast, malicious processes, such as shellcode, will not be patched and will continue to reference the original, non-randomized index numbers, thereby resulting in their neutralization.

In particular, a method in a computing device is described herein. The method includes generating a random seed; modifying an index number corresponding to a system function provided by an operating system, and maintained by a system library of the operating system, based on the random seed; duplicating an original system call table provided by the operating system to generate a shadow system call table, the original system call table and the shadow system call table each associating an unmodified version of the index number with a function pointer that references the system function; modifying the original system call table to associate the unmodified version of the index number with a function pointer that references a trap function instead of the function pointer that references the system function; and generating a hooking function that: causes code issuing a system function call with the modified index number to utilize the shadow system call table, thereby causing the system function to execute; and causes code issuing a system function call with the unmodified version of the index number to utilize the original system call table, thereby causing the trap function to execute, the trap function being configured to neutralize the code that issues the system function call with the unmodified version of the index number.

In one embodiment of the foregoing method, the hooking function is generated at a system call entry point at which a context of a processor of the computing device, that executes the operating system, switches from user mode to kernel mode.

In one embodiment of the foregoing method, the method further comprises parsing code of an application stored on the computing device to detect a first instruction configured to initiate a request for the system function; determining a location in the code of the application to be patched to reference the modified index number; suspending the application; patching the application to reference the modified index number; and resuming the application after said patching is completed.

In one embodiment of the foregoing method, said determining comprises: analyzing a portion of the code that precedes the first instruction to determine a second instruction that specifies the unmodified version of the index number; and determining a location of the second instruction.

In one embodiment of the foregoing method, said patching comprises: replacing the unmodified version of the index number specified by the second instruction with the modified index number.

In one embodiment of the foregoing method, the method further comprises: generating a second random seed after a predetermined period of time expires; and modifying the index number corresponding to the system function based on the second random seed.

In one embodiment of the foregoing method, the unmodified version of the index number of the shadow system call table is further associated with a logging function that is configured to collect information associated with an application that is caused to reference the shadow system call table by the hooking function.

In one embodiment of the foregoing method, the operating system is a Linux-based operating system.

A system is also described herein. The system includes one or more processing units and a memory coupled to the one or more processing units, the memory storing program code for execution by the one or more processing units. The program code comprising a random seed generator configured to: a random seed generator configured to: generate a random seed; and a system morpher configured to: duplicate an original system call table provided by the operating system to generate a shadow system call table, the original system call table and the shadow system call table each associating an unmodified version of the index number with a function pointer that references the system function; modify the original system call table to associate the unmodified version of the index number with a function pointer that references a trap function instead of the function pointer that references the system function; and generate a hooking function that: causes code issuing a system function call with the modified index number to utilize the shadow system call table, thereby causing the system function to execute; and causes code issuing a system function call with the unmodified version of the index number to utilize the original system call table, thereby causing the trap function to execute, the trap function being configured to neutralize the code that issues the system function call with the unmodified version of the index number.

In one embodiment of the foregoing system, the hooking function is generated at a system call entry point at which a context of the one or more processing units of the computing device, that executes the operating system, switches from user mode to kernel mode.

In one embodiment of the foregoing system, the program code further comprising: a code parser configured to: parse code of an application stored on the computing device to detect a first instruction configured to initiate a request for the system function; and determine a location in the code of the application to be patched to reference the modified index number; an application execution controller configured to: suspend the application; and a patcher configured to: patch the application to reference the modified index number, the application execution controller further configured to resume the application after said patching is completed.

In one embodiment of the foregoing system, said code parser is further configured to: analyze a portion of the code that precedes the first instruction to determine a second instruction that specifies the unmodified version of the index number; and determine a location of the second instruction.

In one embodiment of the foregoing system, said patcher is further configured to: replace the unmodified version of the index number specified by the second instruction with the modified index number.

In one embodiment of the foregoing system, the random seed generator is further configured to: generate a second random seed after a predetermined period of time expires; and the system morpher is further configured to: modify the index number corresponding to the system function based on the second random seed.

In one embodiment of the foregoing system, the unmodified version of the index number of the shadow system call table is further associated with a logging function that is configured to collect information associated with an application that is caused to reference the shadow system call table by the hooking function.

In one embodiment of the foregoing system, the operating system is a Linux-based operating system.

A computer-readable storage medium having program instructions recorded thereon that, when executed by a processing device, perform a method for modifying a computing process is further described herein. The method includes generating a random seed; modifying an index number corresponding to a system function provided by an operating system, and maintained by a system library of the operating system, based on the random seed; duplicating an original system call table provided by the operating system to generate a shadow system call table, the original system call table and the shadow system call table each associating an unmodified version of the index number with a function pointer that references the system function; modifying the original system call table to associate the unmodified version of the index number with a function pointer that references a trap function instead of the function pointer that references the system function; and generating a hooking function that: causes code issuing a system function call with the modified index number to utilize the shadow system call table, thereby causing the system function to execute; and causes code issuing a system function call with the unmodified version of the index number to utilize the original system call table, thereby causing the trap function to execute, the trap function being configured to neutralize the code that issues the system function call with the unmodified version of the index number.

In one embodiment of the foregoing computer-readable storage medium, the hooking function is generated at a system call entry point at which a context of a processor of the computing device, that executes the operating system, switches from user mode to kernel mode.

In one embodiment of the foregoing computer-readable storage medium, the method further comprising: parsing code of an application stored on the computing device to detect a first instruction configured to initiate a request for the system function; determining a location in the code of the application to be patched to reference the modified index number; suspending the application; patching the application to reference the modified index number; and resuming the application after said patching is completed.

In one embodiment of the foregoing computer-readable storage medium, said determining comprises: analyzing a portion of the code that precedes the first instruction to determine a second instruction that specifies the unmodified version of the index number; and determining a location of the second instruction.

### III. Example Systems and Methods for Detecting and/or Neutralizing the Execution of Malicious Code

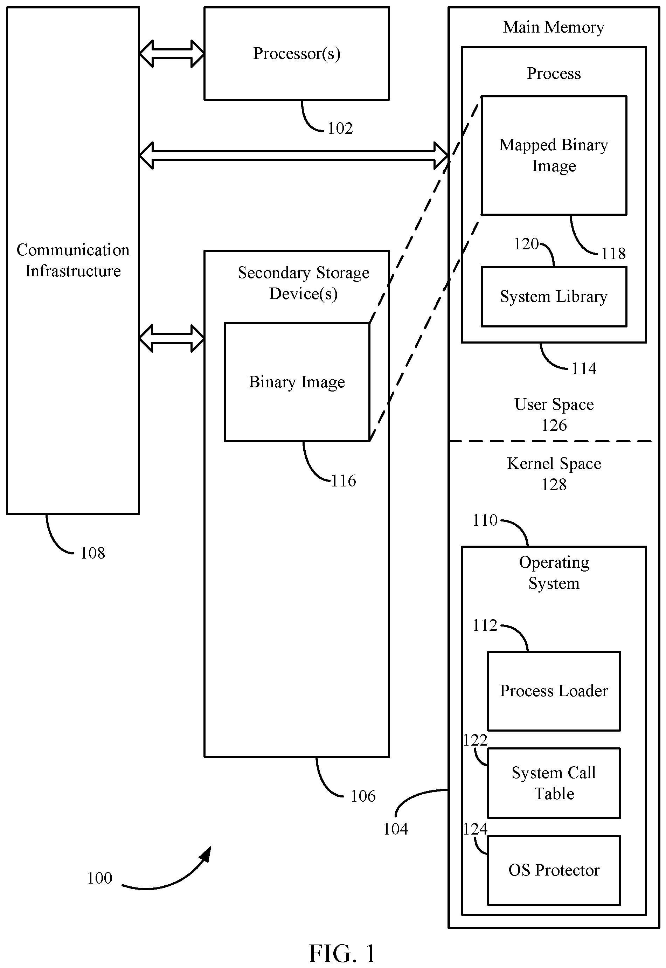

FIG. 1 depicts components of a computer system 100 in accordance with one embodiment that detects and/or neutralizes the execution of malicious code associated with a computing process executing thereon. As shown in FIG. 1, computer system 100 includes one or more processor(s) 102 (also called central processing units, or CPUs), a primary or main memory 104, and one or more secondary storage device(s) 106. Processor(s) 102, main memory 104, and secondary storage device(s) 106 are connected to a communication interface 108 via a suitable interface, such as one or more communication buses. In some embodiments, processor(s) 102 can simultaneously operate multiple computing threads, and in some embodiments, processor(s) 102 may each comprise one or more processor core(s). Examples of main memory 104 include a random access memory (RAM) (e.g., dynamic RAM (DRAM), synchronous DRAM (SDRAM), dual-data rate RAM (DDRRAM), etc.). Secondary storage device(s) 106 include for example, one or more hard disk drives, one or more memory cards, one or more memory sticks, a floppy disk, magnetic tape, compact disk, DVD, optical storage disk, or any other computer data storage device.

As shown in FIG. 1, main memory 104 may be segmented into one or more regions or spaces. In particular, main memory 104 may be segmented into a user space 126 and a kernel space 128. Kernel space 128 may be reserved for running and storing an operating system 110, its kernel and kernel extensions, device drivers, etc. User space 126 may be configured to store and run application processes (e.g., process 114). Operating system 110 may be a Linux-based operating system, although the embodiments described herein are not so limited. Examples of Linux-based operating systems include, but are not limited, Ubuntu, Debian, Fedora, CentOS, Red Hat Enterprise Linux, Android (and its variants), etc.

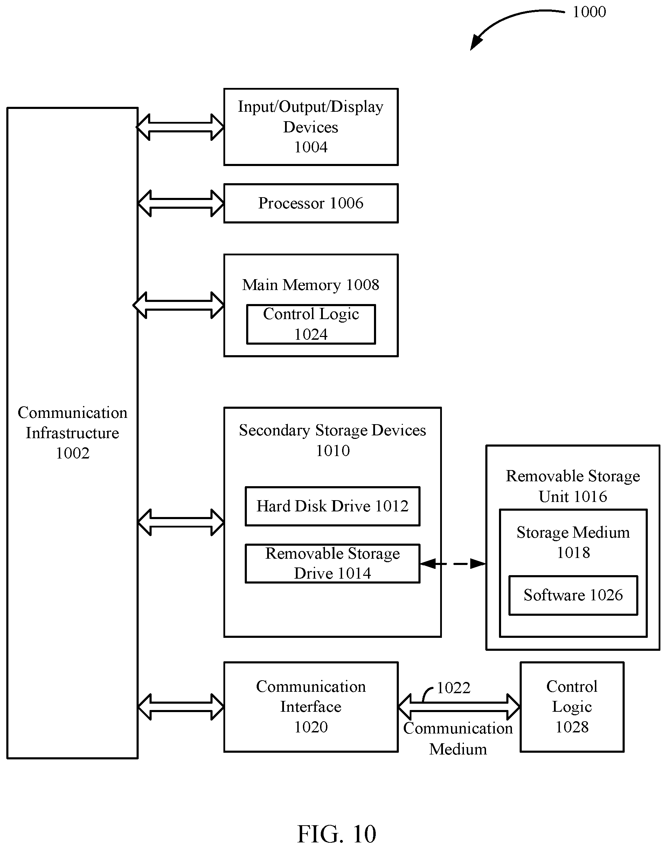

Accordingly, operating system 110 is shown as being stored in kernel space 128. Operating system 110 may manage one or more hardware components (e.g., processor(s) 102, main memory 104, secondary storage device(s) 106, etc.) and software executing on computer system 100. Example hardware components of computer system 100 are described in detail below in reference to FIG. 10. Computer system 100 may be any type of processing device comprising operating system 110, including a desktop computer, a server, a mobile device (e.g., a tablet, a personal data assistant (PDA), a smart phone, a laptop, etc.), an IoT device, etc. It is noted that while operating system 110 is shown as residing in kernel space 128, it noted that certain components (e.g., user-mode drivers) may reside in user space 126.

Operating system 110 may have one or more components that perform certain tasks relating to the execution of software on computer system 100. One such component is process loader 112. Process loader 112 is configured to initiate creation of a computing process (or "process") 114 in main memory 104 and store process 114 in user space 126 of main memory 104. Process 114 is an instance of a computer program being executed by processor(s) 102. The computer program may comprise an application program (or "application"), a system program, or other computer program being executed by processor(s) 102. The computer program is embodied in instructions and/or data included in a binary image (e.g., binary image 116). In accordance with an embodiment, binary image 116 is formatted in accordance with an executable and linkable format (also known as the ELF format), although the embodiments described herein are not so limited.

To initiate creation of process 114, process loader 112 loads (or "maps") binary image 116, which is stored in secondary storage device(s) 106, into an address space allocated for process 114 in main memory 104 based on information included in binary image 116. The binary image mapped into main memory 104 is represented in FIG. 1 by mapped binary image 118. Process loader 112 builds up an initial execution context of process 114. Computer program execution (i.e., process 114) begins when processor(s) 102 commence executing the first instruction of the computer program. Process 114 may comprise one or more threads of execution that execute a subset of instructions concurrently.

As the program execution evolves, other component(s) of operating system 110 allocate various resources to process 114. The execution context of process 114 may comprise information about such resource allocation, a current state of the program execution, an instruction that is to be executed next, and other information related to the program execution. The computer program execution continues until processor(s) 102 execute a termination or halt instruction.

Operating system 110 may also load one or more libraries in user space 126, which are accessible by processes (e.g., process 114) loaded into user space 126 of main memory 104. An example of a library is a system library 120. System library 120 may be an implementation of the C standard library, such as, but not limited to libc, glibc, etc. System library 120 may comprise wrapper functions corresponding to system calls for system functions provided by the kernel of operating system 110. Applications may invoke a system call using the wrapper functions of system library 120 to access a system function. Generally, system functions are configured to create processes, perform network and/or file I/O, etc. However, system functions may be configured to perform many other functions. Examples of system functions include, but are not limited to, open(), fork(), read(),write(), printf(), etc.

When a user application invokes a wrapper function, the wrapper function specifies a system call index value (stored via standard library 120 (e.g., hardcoded therein)) corresponding to the system call, initiates a request for the system call, and causes processor(s) 102 to switch its context from user mode to kernel mode, thereby moving its execution to kernel space 128. Wrapper functions may initiate a request for the system call and cause processor(s) 102 to switch its context via a particular assembly instruction (e.g., "syscall", "sysenter" and/or the like), via invoking an interrupt ("int 0x80") etc. Once processor(s) 102 are switched to kernel mode, execution reaches the system call entry point. At the system call entry point, the kernel of operating system 110 may validate the system call request and/or may locate the corresponding system function based on an index number corresponding to the system call, although it is noted that the operations that occur at a system call entry point may vary depending on the architecture of computer system 100 and/or the version of the kernel of operating system 110. Wrapper functions may specify the system call index number by storing the number in a register of processor(s) 102 (e.g., RAX, EAX, etc.). The register in which the index number is stored may vary depending on the architecture of processor(s) 102.

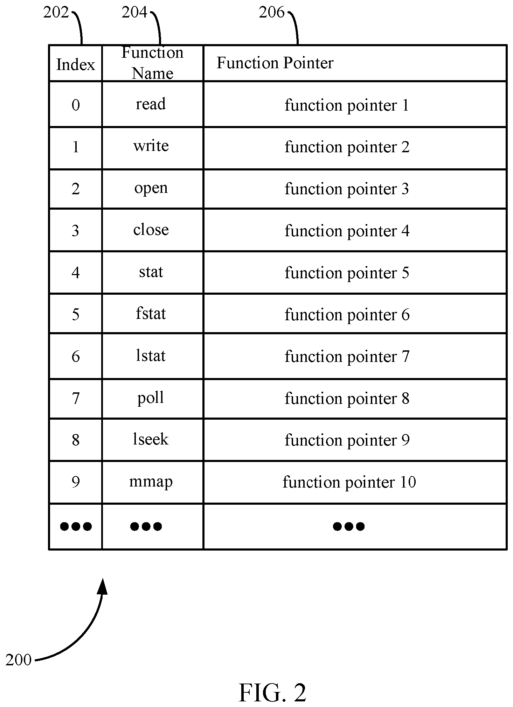

The kernel maintains a system call table 122. System call table 122 comprises a plurality of pointers that point to the system functions to be executed. Each of the pointers are indexed in accordance with a system call index number. For example, FIG. 2, depicts a system call table 200 in accordance with an example embodiment. As shown in FIG. 2, system call table 200 comprises a first column 202, a second column 204, and/or a third column 206. First column 202 comprises a plurality of index numbers, each corresponding to a particular system call. Second column 204 comprises a plurality of symbol names, each corresponding to a name of the system function. Third column 206 comprises a plurality of function pointers, each pointing to a particular system function maintained by operating system 110.

Returning now to FIG. 1, after the system call is validated and the function pointer is located via system call table 122, the system function is executed. Malicious processes, such as shellcode, attempt to access such system functions to carry out various exploits. Such processes often access system functions directly via assembly instructions, rather than utilizing system library 120 to reduce its size.

To prevent the shellcode from executing properly, embodiments described herein modify (or "morph") certain aspects of operating system 110 during run time. For example, operating system 110 may comprise an operating system protector 124. Operating system protector 124 may be configured to randomize the index numbers corresponding to the system functions maintained by system library 120 and duplicate system call table 122 to create a shadow system call table. The shadow system call table may comprise the function pointers to the various system calls. However, the original system call table is modified by operating system protector 124 such that the pointers (e.g., as shown in column 206 of FIG. 2) point to trap functions, rather than pointing to the actual system functions. Operating system protector 124 may also be configured to modify the system call entry point to include a hooking function that determines whether a system call is referencing the randomized index number or the original, unmodified index number. During execution, if the hooking function determines that the system call is referencing an original index number, the hooking function causes the flow of execution to utilize the original system call table (i.e., system call table 122). However, if the hooking functions determines that the system call is referencing a randomized index number, the hooking function causes the flow of execution to utilize the shadow system call table. To ensure that valid applications utilize the randomized index numbers, operating system protector 124 patches the code of such applications (e.g., mapped binary image 118) loaded in main memory 104 to reference the randomized indexed numbers, thereby enabling valid application processes to correctly reference the system calls. In contrast, malicious processes, such as shellcode, continue to reference the original, non-randomized index numbers of the original system call table (i.e., system call table 122).

The trap functions may be configured to notify a user of a potential attack and/or suspend and/or terminate the process accessing such functions. Operating system protector 124 may be configured to execute upon computer system 100 booting up or on-demand, for example, may be launched by the user.

Subsection A describes techniques for morphing system call table 122 and creating a shadow system call table. Subsection B describes techniques for patching loaded applications to reference the pointers in the shadow system call table.

### A. Techniques for Morphing and Duplicating System Call Tables

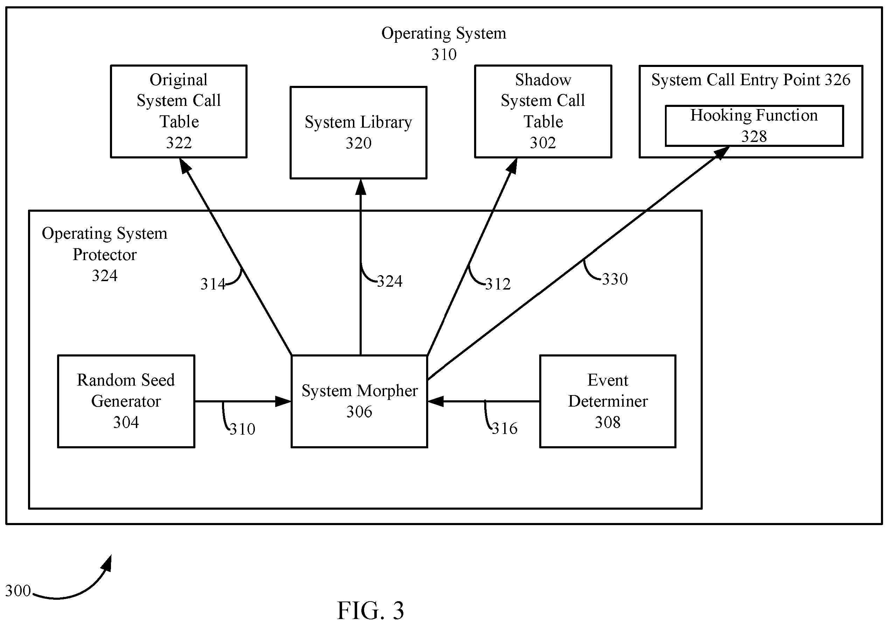

FIG. 3 is a block diagram of a system 300 for morphing and duplicating system call tables in accordance with an example embodiment. As shown in FIG. 3, system 300 includes an operating system 310. Operating system 310 is an example of operating system 110, as described above with reference to FIG. 1. Operating system 310 comprises an operating system protector 324, a system call table 322, a duplicate (or shadow) system call table 302, a system library 320, and a system call entry point 326. Operating system protector 324, system call table 322, and system library 320 are examples of operating system protector 124, system call table 122, and system library 120, as described above with reference to FIG. 1. As also shown in FIG. 3, operating system protector 324 includes a random seed generator 304, a system morpher 306 and an event determiner 308.

Random seed generator 304 may be configured to generate one or more random seeds 310 that are utilized to randomize index numbers for system functions maintained by system library 320. In accordance with an embodiment, random seed generator 304 may generate a single random seed that is utilized to randomize each of the index numbers. In accordance with another embodiment, random seed generator 304 may generate a particular random seed for each of a plurality of subsets (e.g., one or more) of the index numbers. It is noted that a higher level of complexity will be encountered by an attacker if index numbers are randomized using different random seeds rather than using a single random seed for each of the index numbers. It is further noted that random seed generator 304 may utilize any number of techniques to generate random seed(s) 310. It is noted that only the main instance of system library 320 is modified to include randomized index numbers and that a plurality of different applications and/or processes utilizes the main instance of the modified system library 320 during execution. Thus, it is not required to create multiple copies of system library 320.

After random seed(s) 310 are generated, system morpher 322 may issue a write command 324 that causes each of the index numbers maintained by system library 320 to be modified based on random seed(s) 310 to overwrite the function pointers stored in system call table 322. For instance, each of the original index numbers are combined with (e.g., added to) a particular random seed of random seed(s) 310. It is noted that the original index numbers may be modified by random seed(s) 310 in any manner and the modification techniques described herein are purely exemplary.

System morpher 306 may be configured to generate and/or add a hooking function 328 at system call entry point 326. For example, system morpher 306 may generate hooking function 328 and/or issue a write command 330 that inserts hooking function 328 at system call entry point 326. Hooking function 328 may be configured to determine whether a system call utilizes a randomized index number. For instance, hooking function 328 may determine whether the received index number is greater than random seed(s) 310. If hooking function 328 determines that the received index number is less than or equal to random seed(s) 310, hooking function 328 directs the flow of execution such that original system call table 328 is utilized. If hooking function 328 determines that the received index number is greater than random seed(s) 310, hooking function 328 directs the flow of execution such that shadow system call table 302 is utilized.

System morpher 306 may be configured to locate system call table 322 in memory (e.g., kernel space 128 of main memory 104, as shown in FIG. 1). For example, system morpher 306 may be configured to read a map file (e.g., system.map) managed by operating system 310. The file may include a symbol table that associates symbol names (e.g., function names, table names, variable names, etc.) to their respective addresses in memory (e.g., main memory 104). System morpher 306 may parse the file to locate an identifier of system call table 322 (e.g., "sys_call_table"). Once the identifier is found, system morpher 306 continues to parse the file to determine the address determined with the identifier. The address specifies the location of system call table 322 in memory. In accordance with an embodiment, system morpher 306 may first determine the version of the currently running kernel of operating system 310 before performing the aforementioned steps, as different kernels may associate and/or identify system call table 322 in different manners. It is noted that system morpher 306 may determine the location of system call table 322 in memory utilizing other techniques and the techniques described herein are purely exemplary.

After system call table 322 is located in memory, system morpher 306 duplicates it to generate a shadow system call table 302. For example, system morpher 306 may issue a write command 312 to allocate memory in main memory 104 for shadow system call table 302 and/or to copy the values (e.g., index numbers, symbol names, function pointers, etc.) from system call table 322 to shadow system call table 302.

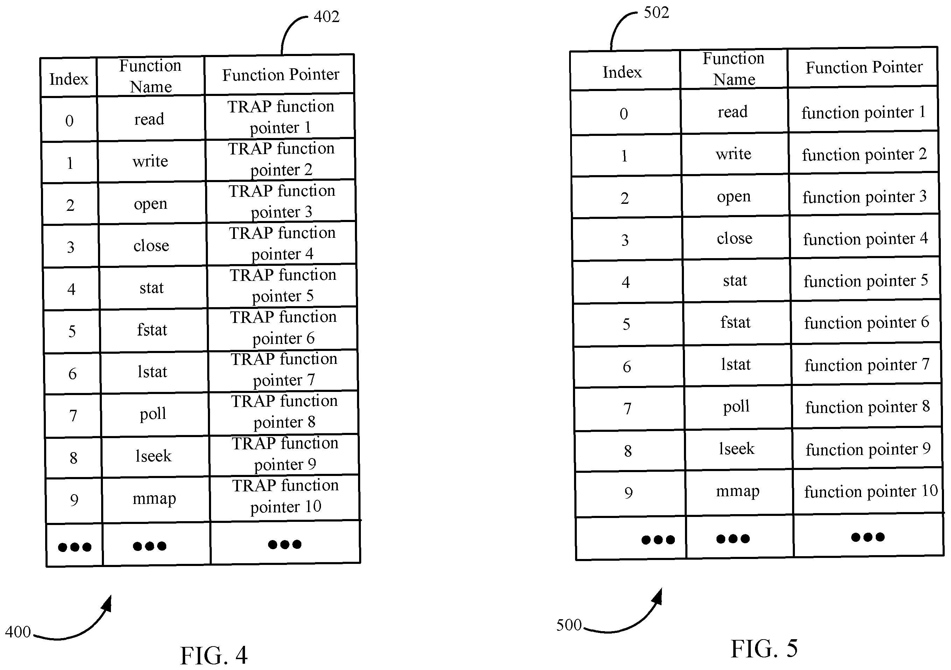

System morpher 306 may then modify original system call table 322 to include traps that cause malicious processes utilizing the original, unmodified index numbers to be suspended and/or terminated. For instance, FIG. 4 is a block diagram of a system call table 400 that has been modified with traps in accordance with an embodiment. System call table 400 is an example of system call table 322, as described above with reference to FIG. 3. As shown in FIG. 4, system morpher 306 has modified function pointers shown in column 402 such that they point to trap functions rather than system functions. Thus, when a process (e.g., a malicious process) attempts to access a system function utilizing one of the non-randomized index numbers, hooking function 328 will cause system call table 400 to be referenced, and therefore, the trap function will be executed rather than the requested system function. The trap function may be configured to pause the process that references the non-randomized index number of. While paused, the trap function may generate a log that comprises various characteristics of the process that accessed the trap function. Such characteristics include, but are not limited to, an identifier of the process (e.g., process ID), a timestamp at which the system function is called and/or executed, other processes that are related to the process (e.g., a father process, a sibling process, etc.), etc. After the log is generated, the trap function may neutralize (e.g., terminate) the process, its father process(es), and/or sibling process(es). The trap function may continue to neutralize related processes until it reaches a valid (e.g., whitelisted), non-malicious process. It is noted that only some of the index numbers of original system call table 322 may be associated with a trap function. That is, it may not be necessary to protect each of the system functions provided by system library 320 and that each system function may be selectively protected via the techniques described herein.

It is noted that in certain embodiments, operating system protector 324 may operate in audit mode. When in audit mode, processes that reference non-randomized index numbers are resumed and not terminated. When resuming the process, operating system protector 324 causes the process to reference the corresponding randomized index number, thereby enabling the requested system call function to execute. The log may be subsequently analyzed to study the behavior of the process. If a determination is made that the process is malicious, the process will be blacklisted during subsequent executions, thereby causing the process to access trap functions and resulting in its termination. However, if a determination is made that the process is non-malicious, the process may be whitelisted. As explained in subsection B, whitelisted processes may be patched such that they reference the randomized index numbers of system library 320 during execution, rather than the non-randomized index numbers.

Referring again to FIG. 3, system morpher 322 may issue a write command 314 that causes new function pointers to overwrite the function pointers stored in system call table 322. The new function pointers point to the trap functions.

Shadow system call table 302 is a duplicate of system call table 322 before it was modified. Thus, shadow system call table 302 may comprise the original, unmodified index numbers. When hooking function 328 determines that an index number is greater than random seed(s) 310, hooking function 328 may subtract the value of random seed(s) 310 from the received index number and causes the flow of execution to provide the resulting index number (which corresponds to the unmodified version of the index number) to shadow system call table 302, rather than original system call table 322.

For example, FIG. 5 is a block diagram of a shadow system call table 500 that in accordance with an embodiment. System call table 500 is an example of shadow system call table 302, as described above with reference to FIG. 3. As shown in FIG. 5, each of index numbers of column 502 include the original, unmodified index numbers, and each of the original, unmodified index numbers are associated with a corresponding function pointer that points to the system function.

In accordance with an embodiment, a logging function may also be executed when a system function is accessed via a randomized index number. The logging function may collect information associated with an application or process that references the randomized index number. Such information may include, but is not limited to an identifier of the process (e.g., process ID), a timestamp at which the system function is called and/or executed, other processes that are related to the process (e.g., a father process, a sibling process, etc.), etc.

As will be described below in Subsection B, after system call table 322 is modified to point to trap functions, system library 320 is modified with the randomized index numbers, and system calls that utilize randomized index numbers are caused to reference shadow system call table 300, application(s) (e.g., mapped binary image 118, as shown in FIG. 1) may be patched to reference the randomized index numbers of modified system library 320. Thus, any processes (e.g., statically-complied shellcode) that attempt to access a system function will be diverted to a trap function of original system call table 322 and subsequently neutralized, whereas valid, non-malicious processes that have been patched will successfully call the requested system functions via the function pointers maintained by shadow system call table 302. For instance, a malicious process may reference an index number that is less than or equal to the value of a random seed of random seed(s) 310. Such processes will be diverted to a trap function of original system call table 322. Valid, patched processes may reference an index that number that is greater than a random seed of random seed(s) 310. Such processes will be enabled to successfully call the requested system functions via shadow system call table 302.

In accordance with an embodiment, system morpher 306 may be configured to randomize index numbers maintained by system library 320 each time a particular event occurs. For instance, event determiner 308 may determine whether such an event occurs. The event may include an expiration of a predetermined time period. For instance, each time a predetermined time period expires (e.g., 10 minutes, 1 hour, 1 day), event determiner 308 may provide an indication 316 to system morpher 306 that indicates that the time period has expired. In response, system morpher 306 may request random seed generator 304 to generate new random seed(s) 310 and generate new randomized index numbers for system library 320. Alternatively, the event may also include detection of access to a trap function. In this case, hooking function 328 may provide an indication to event determiner 308 that indicates that a process has attempted to call a system function using a non-randomized index value and conclude that such a process is malicious. Event determiner 308 may determine that an attack is under way and, in response, may provide indication 310 to system morpher 306, which causes system morpher 306 to request new random seed(s) 310 and generate new randomized index numbers for system library 320, as described above. It is noted that event determiner 308 may cause system morpher 306 to generate new randomized index numbers upon detecting other types of events and that the events described herein are purely exemplary.

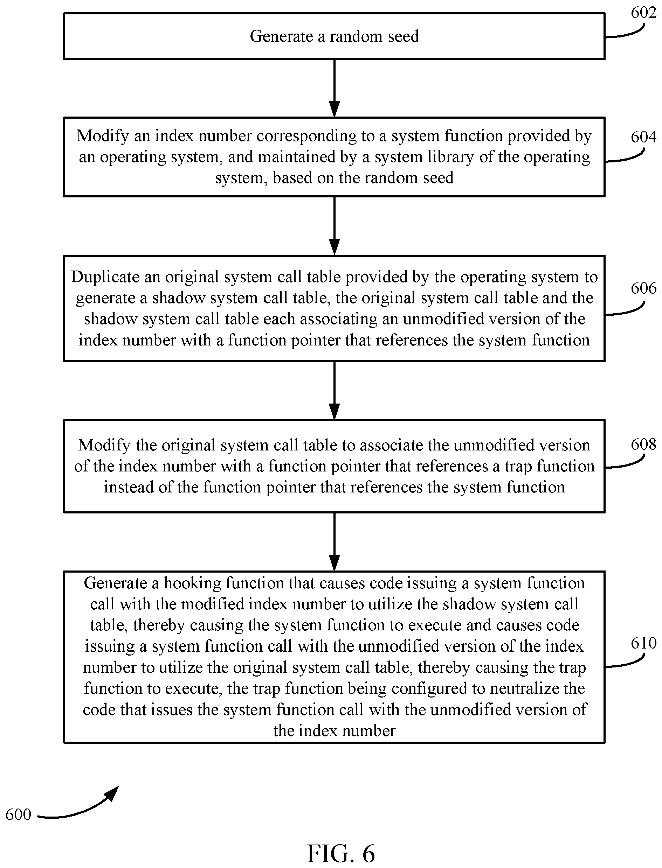

Accordingly, a computer system may be protected from malicious processes in many ways. For example, FIG. 6 depicts a flowchart 600 of an example method in a computing device for protecting a computer system from malicious processes, according to an example embodiment. Operating system protector 124 and operating system protector 324 of FIGS. 1 and 3 may operate according to flowchart 600. For illustrative purposes, flowchart 600 is described with continued reference to FIG. 3. Flowchart 600 and operating system protector 324 are described as follows.

Flowchart 600 begins with step 602. At step 602, a random seed is generated. For example, with reference to FIG. 3, random seed generator 304 may generate one or more random seed(s) 310.

At step 604, an index number corresponding to a system function provided by an operating system, and maintained by a system library of the operating system, is modified based on the random seed. For example, with reference to FIG. 3, system morpher 306 modifies an index number corresponding to a system function provided by operating system 310, and maintained by system library 320, is modified based on random seed(s) 310.

In accordance with one or more embodiments, the operating system is a Linux-based operating system.

At step 606, an original system call table provided by the operating system is duplicated to generate a shadow system call table, the original system call table and the shadow system call table each associating an unmodified version of the index number with a function pointer that references the system function. For example, with reference to FIG. 3, system morpher 306 duplicates original system call table 322 to generate shadow system call table 302. As shown in FIGS. 4 and 5, each of system call tables 400 and 500 maintain an unmodified version of index numbers.

At step 608, the original system call table is modified to associate the unmodified version of the index number with a function pointer that references a trap function instead of the function that references the system function. For example, with reference to FIG. 3, system morpher 306 modifies original system call table 322 to associate the unmodified version of the index number with a function pointer that references a trap function (as shown in column 402 of FIG. 4).

At step 610, a hooking function is generated that causes code issuing a system function call with the modified index number to utilize the shadow system call table, thereby causing the system function to execute and causes code issuing a system function call with the unmodified version of the index number to utilize the original system call table, thereby causing the trap function to execute, the trap function being configured to neutralize the code that issues the system function call with the unmodified version of the index number. For example, with reference to FIG. 3, system morpher 306 generates hooking function 328 that causes code issuing a system function call with the modified index number to utilize shadow system call table 302 and causes code issuing a system function call with the unmodified version of the index number to utilize original system call table 322.

In accordance with one or more embodiments, the hooking function is generated at a system call entry point at which a context of a processor of the computing device, that executes the operating system, switches from user mode to kernel mode. For example, with reference to FIG. 3, system morpher 306 generates hooking function 328 and inserts hooking function 328 at system call entry point 326.

In accordance with one or more embodiments, a second random seed is generated after a predetermined period of time expires and the index number corresponding to the system function is modified based on the second random seed. For example, with reference to FIG. 4, event determiner 308 may provide an indication 316 to system morpher 306 upon determination that a predetermined period of time has expired. In response, random seed generator 304 may generate a second random seed and system morpher 306 modifies the index number corresponding to the system function based on the second random seed.

In accordance with one or more embodiments, the unmodified version of the index number of the shadow system call table is further associated with a logging function that is configured to collect information associated with an application that is caused to reference the shadow system call table by the hooking function. For example, with reference to FIG. 3, system morpher 306 may be configured to associate the unmodified version of the index number of shadow system call table 302 with the logging function.

### B. Patching Applications to Work with a Shadow System Call Table

After original system call table 322 is duplicated to generate shadow system call table 302, original system call table 322 has been modified to include traps, system library 320 has been modified to include randomized index numbers, operating system protector 324 may be configured to analyze binaries loaded in computer system 100 (e.g., binary image 116) to determine locations in which the binaries are to be patched in order to utilize the randomized index numbers, and therefore, shadow system call table 302.

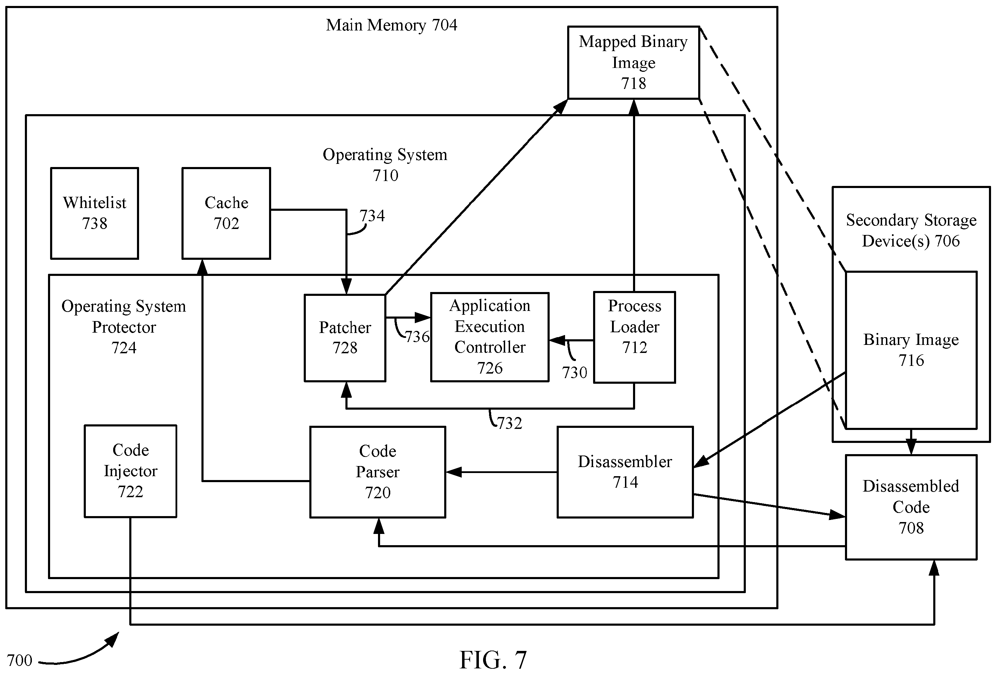

For example, FIG. 7 is a block diagram of a system 700 for patching an application to utilize a shadow system call table in accordance with an example embodiment. As shown in FIG. 7, system 700 includes a main memory 704 and secondary storage device(s) 706. Main memory 704 and secondary storage device(s) 706 are examples of main memory 104 and secondary storage device(s) 106, as described above with reference to FIG. 1. Main memory 704 may include operating system 710 and a mapped binary image 718. Operating system 710 is an example of operating system 310, as described above with reference to FIG. 3, and mapped binary image 718 is an example of mapped binary image 116, as described above with reference to FIG. 1. Secondary storage device(s) 706 may include binary image 716. Binary image 716 is an example of binary image 116, as described above with reference to FIG. 1. As also shown in FIG. 7, operating system 710 comprises an operating system protector 724 and maintains a cache 702 and/or a whitelist 738. Operating system protector 724 is an example of operating system protector 324 as described above with reference to FIG. 3. Operating system protector 724 comprises a process loader 712, a disassembler 714, a code parser 720, a code injector 722, an application execution controller 726, and a patcher 728. Process loader 712 is an example of process loader 112, as described above with reference to FIG. 1.

Disassembler 714 may be configured to disassemble binary image 716 to generate disassembled code 708. Disassembled code 708 may comprise assembly-level instructions corresponding to source code of binary image 716. Disassembled code 708 may be stored in main memory 704 or on secondary storage device(s) 706.

Code parser 720 may be configured to parse disassembled code 708 to locate instructions that are used to initiate a request for a system function. For instance, in an embodiment in which binary image 716 is in a .ELF format, code parser 720 may parse the header (e.g., an .ELF header) of binary image 716 to retrieve the text section (e.g., .txt section) offset and/or size thereof of the text section of binary image 716. The text section comprises the assembly instructions. Based on the offset and/or size, code parser 720 may locate the assembly instructions and parses the text section for instructions configured to initiate a request for the system function. For each such instruction located, code parser 720 may analyze one or more instructions before the instruction to determine which system function is being called. For example, in an embodiment in which computer system 100 is based on an x86 architecture, the index corresponding to the desired system function call is stored in a register of processor(s) 120 (e.g., the RAX or EAX registers). Accordingly, code parser 720 may search for the last instruction preceding the requesting instruction that assigns a value to the register. For instance, consider the following example set of instructions:

```
mov RAX, 123
      syscall
```

In this example, code parser 720 detects the 'syscall' instruction and traces the code back until an instruction manipulating the RAX register is found. In the foregoing example, code parser 720 finds an instruction that moves an immediate value '123' to the RAX register. The value '123 corresponds to the index value of the desired system function to be called. Thus, code parser 720 determines that the code is calling the system function corresponding to index '123'.

In another example, consider the following instruction sequence:

```
mov RDI, 50
      mov RAX, RDI
      syscall
```

In this example, code parser 720 detects the 'syscall' instruction and traces the code back until an instruction manipulating the RAX register is found. In the foregoing example, code parser 720 finds an instruction that moves the value stored in the RDI register into the RAX register. At this point, code parser 720 still has not determined the system function that is to be called. Thus, code parser 720 continues to trace the instruction sequence backwards. The next instruction detected is the 'mov RDI, 50' instruction. This instruction stores the value '50' into the RDI instruction. When analyzing this sequence of instructions collectively, code parser 720 determines that an index value of '50' is stored in the RAX register, which corresponds to the index value of the desired system function to be called. Thus, code parser 720 determines that the code is calling the system function corresponding to index '50.'

In yet another example, consider the following instruction sequence:

```
      mov RAX, 50
      add RAX, 6
      syscall
```

In this example, code parser 720 detects the 'syscall' instruction and traces the code back until an instruction manipulating the RAX register is found. In the foregoing example, code parser 720 find an instruction that adds the value '6' with the value already stored in the RAX register. At this point, code parser 720 still has not determined the system function that is to be called, as it has not determined what value was already stored in the RAX register. Thus, code parser 720 continues to trace the instruction sequence backwards. The next instruction detected is the 'mov RAX, 50' instruction. This instruction stores the value '50' into the RAX instruction. When analyzing this sequence of instructions collectively, code parser 720 determines that an index value of '56 is stored in the RAX register, which corresponds to the index value of the desired system function to be called. Thus, code parser 720 determines that the code is calling the system function corresponding to index '56.'

For each system function call determined via the foregoing code parsing process, information associated with the function call is stored in cache 702. The information stored in cache 702 may include, but is not limited to, the offset of the instruction that assigns the index to the register designated for storing system function index numbers (e.g., RAX) and/or the file(s) of binary image 716 in which the instructions are located. Cache 702 may be a portion of secondary storage devices(s) 706 and/or main memory 704 allocated therefor.

In the event that code parser 720 is unable to ascertain which index number is being referenced based on its analysis, code injector 722 may be configured to mark the offset of the instruction that initiates a request of a system function and/or associates a hooking function between the requesting instruction (e.g., a "syscall" instruction, a "sysenter" instruction, an "int 0x80" instruction, etc.) and the last instruction before the requesting instruction that modifies the register that is configured to store the index number (e.g., RAX). During runtime of the application, when that last instruction is executed, the hooking function may analyze the value stored in the register and modify the value based on the random seed. For instance, the hooking function may subtract the value of the random seed from the value stored in the register.

For system calls for which offsets have been determined, such system calls may be patched during runtime of the application to reference the randomized index values. For example, when process loader 712 loads binary image 716 into main memory 704 at run time (shown as mapped binary image 718), process loader 712 provides a command 730 to application execution controller 726, which causes the application or process corresponding to mapped binary image 718 to be suspended. Process loader 712 may also provide patcher 728 with the name of the application, the names of the files of the application, and/or an identifier of the process to patcher 728 via an indicator 732. Patcher 728 may be configured to retrieve patch information 734 (e.g., offsets of the instructions to be patched) from cache 702 based on the information provided via indicator 732.

Using patch information 734, patcher 728 locates each instruction that writes an index number for a system call to a register. For each instruction, patcher 728 modifies the instruction such that the randomized index number is stored in the register. Once all the instructions have been patched for each file of the application, patcher 728 provides a command 736 to application execution controller 726 that causes the application to resume execution.

In accordance with an embodiment, operating system 710 may maintain a whitelist 738 of applications that are to be patched in an event that an application is trapped. For instance, suppose patch information was not collected for an application, but the application has been indicated as a valid process in whitelist 738. In such a situation, the application will encounter the hooking function described above (i.e., hooking function 328). During execution of the application, the hooking function will compare the index number specified for desired system function and determine that the value is less than or equal to the random seed, and therefore the application will get trapped. However, if the application is whitelisted, the application may be suspended and/or the patch information determination techniques described above will be implemented to determine where the application is needed to be patched. Once the application is patched, the application will resume with the patched information so that the randomized index numbers of the system library (i.e., system library 320), will be referenced (along with shadow system call table 302) when the application resumes execution.

In accordance with another embodiment, the original index numbers are backed up before they are overwritten with the randomized index numbers. In the event that operating system protector 724 is disabled and/or uninstalled, the randomized index numbers are replaced with the original, backed up index numbers (i.e., the application is unpatched). Thus, the application executes as originally intended, without protection from operating system protector 724.

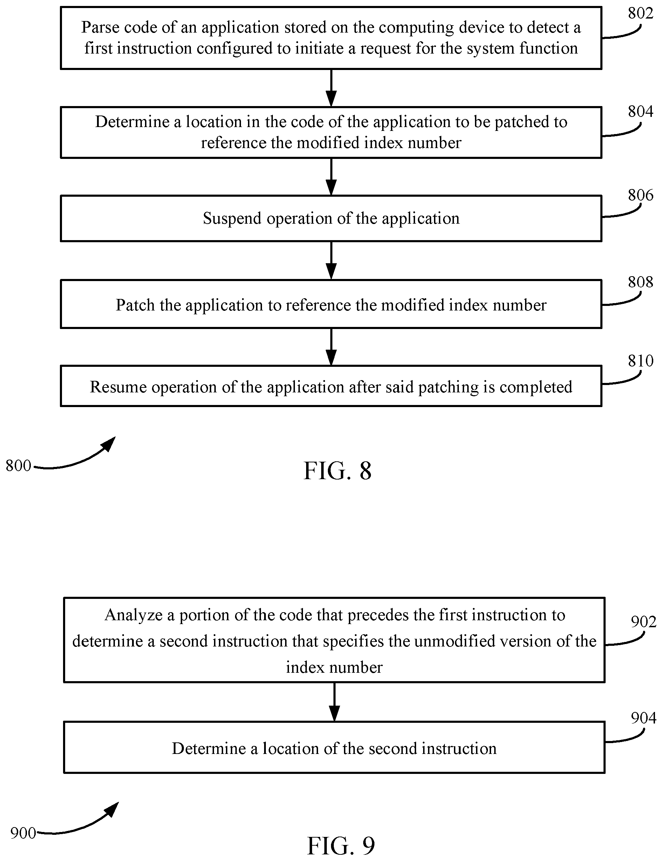

Accordingly, an application may be patched in many ways to operate with a shadow system call table in many ways. For example, FIG. 8 depicts a flowchart 800 of a method for patching an application, according to an example embodiment. Operating system protector 724 of FIG. 7 may operate according to flowchart 800. For illustrative purposes, flowchart 800 is described with continued reference to FIG. 7. Flowchart 800 and operating system protector 724 are described as follows.

Flowchart 800 begins with step 802. At step 802, code of an application stored on the computing device is parsed to detect a first instruction configured to initiate a request for the system function. For example, with reference to FIG. 7, disassembler 714 disassembles binary image 716 to generate disassembled code 708. Code parser 720 may parse disassembled code 708 to detect a first instruction configured to initiate a request for the system function (e.g., "syscall", "sysenter", "int 0x80").

At step 804, a location in the code of the application to be patched to reference the modified index number is determined. For example, with reference to FIG. 7, code parser 720 may determine a location in disassembled code 708 to reference the modified index number (i.e., the index number of system library 320 that was randomized based on random seed(s) 310).

At step 806, the application is suspended. For example, with reference to FIG. 7, application execution controller 726 causes operation of the application (e.g., mapped binary image 718) to be suspended responsive to receiving command 730 from process loader.

At step 808, the application is patched to reference the modified index number. For example, with reference to FIG. 7, patcher 728 patches file(s) of mapped binary image 718 to reference the modified index number.

At step 810, the application is resumed after patching is completed. For example, with reference to FIG. 7, application execution controller 726 causes the application (e.g., mapped binary image 718) to be resumed responsive to receiving command 736 from patcher 728.

In embodiments, one or more of the steps or operations of flowchart 800 herein may not be performed. For example, in accordance with an embodiment, steps 806 and 810 may not be performed and an application may be patched on-the-fly as an atomic operation, while the application is executing.

FIG. 9 depicts a flowchart 900 of a method for determining locations in code of the application to be patched (i.e., step 804 of FIG. 8), in accordance with an example embodiment. Operating system protector 724 of FIG. 7 may operate according to flowchart 900. For illustrative purposes, flowchart 900 is described with continued reference to FIG. 7. Flowchart 900 and operating system protector 724 are described as follows.

Flowchart 900 begins with step 902. At step 902, a portion of the code that precedes the first instruction is analyzed to determine a second instruction that specifies the unmodified version of the index number. For example, with reference to FIG. 7, code parser 720 analyzes a portion of disassembled code 708 that precedes the second instruction that the unmodified version of the index number.

At step 906, a location of the second instruction is determined. For example, with reference to FIG. 7, code parser 720 determines a location (e.g., an offset) of the second instruction.

In accordance with one or more embodiments, patcher 728 performs the patching (i.e., step 808) by replacing the index number specified by the second instruction with a corresponding modified index number of the second plurality of index numbers. For example, with reference to FIG. 7, patcher 728 replaces the index number specified by the second instruction with a corresponding modified index number of the second plurality of index numbers, as specified by the shadow system call table (e.g., shadow system call table 302, as shown in FIG. 3).

In accordance with one or more embodiments, the patching (step 808) is performed by replacing the unmodified version of the index number specified by the second instruction with the modified index number. For example, with reference to FIG. 7, patcher 728 replaces the unmodified version of the index number specified by the second instruction with the modified index number.

### IV. Additional Embodiments

It is noted that while the embodiments described herein disclose that the original system call table (e.g., original system call table 322) and the shadow system call table (e.g., shadow system call table 302) maintain the same, non-randomized index numbers, in certain embodiments, the shadow system call table may maintain the randomized index numbers. That is, the index numbers utilized to access function pointers to corresponding system functions are randomized in accordance with random seed(s). In such an embodiment, it may not be required to randomize the index numbers maintained by the system library (e.g., system library 320). When a system call references a randomized index number, the shadow system call table is utilized to determine the corresponding function pointer, and the system function executes successfully. However, when a system call references a non-randomized index number, the original system call table is utilized, and a trap function is executed that neutralizes the process making the system call.

### V. Example Computer System Implementation

The embodiments described herein, including systems, methods/processes, and/or apparatuses, may be implemented using well known processing devices, servers, smart phones, tablets, personal data assistants (PDAs), Internet-of-Things (IoT) devices, computers, etc. such as a computer 1000 shown in FIG. 10. It should be noted that computer 1000 may represent computing devices linked to, processing devices, traditional computers, and/or the like in one or more embodiments. For example, computing system 100 of FIG. 1, and any of the sub-systems, components, and/or models respectively contained therein and/or associated therewith, may be implemented using one or more computers 1000.

Computer 1000 can be any commercially available and well known communication device, processing device, and/or computer capable of performing the functions described herein, such as devices/computers available from International Business Machines^{®}, Apple^{®}, Sun^{®}, HP^{®}, Dell^{®}, Cray^{®}, Samsung^{®}, Nokia^{®}, etc. Computer 1000 may be any type of computer, including a desktop computer, a server, a mobile device (e.g., a tablet, a personal data assistant (PDA), a smart phone, a laptop, etc.), an IoT device, etc.

Computer 1000 includes one or more processors (also called central processing units, or CPUs), such as a processor 1006. Processor 1006 is connected to a communication infrastructure 1002, such as a communication bus. In some embodiments, processor 1006 can simultaneously operate multiple computing threads, and in some embodiments, processor 1006 may comprise one or more processors.

Computer 1000 also includes a primary or main memory 1008, such as random access memory (RAM). Main memory 1008 has stored therein control logic 1024 (computer software), and data.

Computer 1000 also includes one or more secondary storage devices 1010. Secondary storage devices 1010 include, for example, a hard disk drive 1012 and/or a removable storage device or drive 1014, as well as other types of storage devices, such as memory cards and memory sticks. For instance, computer 1000 may include an industry standard interface, such a universal serial bus (USB) interface for interfacing with devices such as a memory stick. Removable storage drive 1014 represents a floppy disk drive, a magnetic tape drive, a compact disk drive, an optical storage device, tape backup, etc.

Removable storage drive 1014 interacts with a removable storage unit 1016. Removable storage unit 1016 includes a computer useable or readable storage medium 1018 having stored therein computer software 1026 (control logic) and/or data. Removable storage unit 1016 represents a floppy disk, magnetic tape, compact disk, DVD, optical storage disk, or any other computer data storage device. Removable storage drive 1014 reads from and/or writes to removable storage unit 1016 in a well-known manner.

Computer 1000 also includes input/output/display devices 1004, such as touchscreens, LED and LCD displays, monitors, keyboards, pointing devices, etc.

Computer 1000 further includes a communication or network interface 1020. Communication interface 1020 enables computer 1000 to communicate with remote devices. For example, communication interface 1020 allows computer 1000 to communicate over communication networks or mediums 1022 (representing a form of a computer useable or readable medium), such as LANs, WANs, the Internet, etc. Network interface 1020 may interface with remote sites or networks via wired or wireless connections.

Control logic 1028 may be transmitted to and from computer 1000 via the communication medium 1022.

Any apparatus or manufacture comprising a computer useable or readable medium having control logic (software) stored therein is referred to herein as a computer program product or program storage device. This includes, but is not limited to, computer 1000, main memory 1008, secondary storage devices 1010, and removable storage unit 1016. Such computer program products, having control logic stored therein that, when executed by one or more data processing devices, cause such data processing devices to operate as described herein, represent embodiments.

Techniques, including methods, and embodiments described herein may be implemented by hardware (digital and/or analog) or a combination of hardware with one or both of software and/or firmware. Techniques described herein may be implemented by one or more components. Embodiments may comprise computer program products comprising logic (e.g., in the form of program code or software as well as firmware) stored on any computer useable medium, which may be integrated in or separate from other components. Such program code, when executed by one or more processor circuits, causes a device to operate as described herein. Devices in which embodiments may be implemented may include storage, such as storage drives, memory devices, and further types of physical hardware computer-readable storage media. Examples of such computer-readable storage media include, a hard disk, a removable magnetic disk, a removable optical disk, flash memory cards, digital video disks, random access memories (RAMs), read only memories (ROM), and other types of physical hardware storage media. In greater detail, examples of such computer-readable storage media include, but are not limited to, a hard disk associated with a hard disk drive, a removable magnetic disk, a removable optical disk (e.g., CDROMs, DVDs, etc.), zip disks, tapes, magnetic storage devices, MEMS (micro-electromechanical systems) storage, nanotechnology-based storage devices, flash memory cards, digital video discs, RAM devices, ROM devices, and further types of physical hardware storage media. Such computer-readable storage media may, for example, store computer program logic, e.g., program modules, comprising computer executable instructions that, when executed by one or more processor circuits, provide and/or maintain one or more aspects of functionality described herein with reference to the figures, as well as any and all components, capabilities, and functions therein and/or further embodiments described herein.

Such computer-readable storage media are distinguished from and nonoverlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media and signals transmitted over wired media. Embodiments are also directed to such communication media.

The techniques and embodiments described herein may be implemented as, or in, various types of devices. For instance, embodiments may be included in mobile devices such as laptop computers, handheld devices such as mobile phones (e.g., cellular and smart phones), handheld computers, and further types of mobile devices, desktop and/or server computers. A device, as defined herein, is a machine or manufacture as defined by 35 U.S.C. § 101. Devices may include digital circuits, analog circuits, or a combination thereof. Devices may include one or more processor circuits (e.g., central processing units (CPUs) (e.g., processor 1006 of FIG. 10), microprocessors, digital signal processors (DSPs), and further types of physical hardware processor circuits) and/or may be implemented with any semiconductor technology in a semiconductor material, including one or more of a Bipolar Junction Transistor (BJT), a heterojunction bipolar transistor (HBT), a metal oxide field effect transistor (MOSFET) device, a metal semiconductor field effect transistor (MESFET) or other transconductor or transistor technology device. Such devices may use the same or alternative configurations other than the configuration illustrated in embodiments presented herein.

### V. Conclusion

While various embodiments of the present invention have been described above, it should be understood that they have been presented by way of example only, and not limitation. It will be understood by those skilled in the relevant art(s) that various changes in form and details may be made therein. Accordingly, the breadth and scope of the present invention should not be limited by any of the above-described exemplary embodiments, but should be defined only in accordance with the following claims and their equivalents.

## Claims

1. A method in a computing device, comprising:
generating (602) a random seed;
modifying (604) an index number corresponding to a system function provided by an operating system, and maintained by a system library of the operating system, based on the random seed;
duplicating (606) an original system call table provided by the operating system to generate a shadow system call table, the original system call table and the shadow system call table each associating an unmodified version of the index number with a function pointer that references the system function;
modifying (608) the original system call table to associate the unmodified version of the index number with a function pointer that references a trap function instead of the function pointer that references the system function; and
generating (610) a hooking function that:
causes code issuing a system function call with the modified index number to utilize the shadow system call table, thereby causing the system function to execute; and
causes code issuing a system function call with the unmodified version of the index number to utilize the original system call table, thereby causing the trap function to execute, the trap function being configured to neutralize the code that issues the system function call with the unmodified version of the index number;
parsing code of an application stored on the computing device to detect a first instruction configured to initiate a request for the system function;
determining a location in the code of the application to be patched to reference the modified index number;
suspending the application;
patching the application to reference the modified index number; and
resuming the application after said patching is completed.

2. The method of claim 1, wherein the hooking function is generated at a system call entry point at which a context of a processor of the computing device, that executes the operating system, switches from user mode to kernel mode.

3. The method of claim 1, wherein said determining comprises:
analyzing a portion of the code of the application that precedes the first instruction to determine a second instruction that specifies the unmodified version of the index number; and
determining a location of the second instruction.

4. The method of claim 3, wherein said patching comprises:
replacing the unmodified version of the index number specified by the second instruction with the modified index number.

5. The method of claim 1, further comprising:
generating a second random seed after a predetermined period of time expires; and
modifying the index number corresponding to the system function based on the second random seed.

6. The method of claim 1, wherein the unmodified version of the index number of the shadow system call table is further associated with a logging function that is configured to collect information associated with an application that is caused to reference the shadow system call table by the hooking function.

7. A system (100), comprising:
one or more processing units (102, 1006); and
a memory (104, 1008) coupled to the one or more processing units (102, 1006), the memory (104, 1008) storing program code for execution by the one or more processing units (102, 1006), the program code comprising:
a random seed generator (304) configured to:
generate a random seed; and
a system morpher (306) configured to:
modify an index number corresponding to a system function provided by an operating system (110), and maintained by a system library of the operating system (110), based on the random seed;
duplicate an original system call table (322) provided by the operating system (110) to generate a shadow system call table (302), the original system call table (322) and the shadow system call table (302) each associating an unmodified version of the index number with a function pointer that references the system function;
modify the original system call table to associate the unmodified version of the index number with a function pointer that references a trap function instead of the function pointer that references the system function; and
generate a hooking function (328) that:
causes code issuing a system function call with the modified index number to utilize the shadow system call table (302), thereby causing the system function to execute; and
causes code issuing a system function call with the unmodified version of the index number to utilize the original system call table (322), thereby causing the trap function to execute, the trap function being configured to neutralize the code that issues the system function call with the unmodified version of the index number;
a code parser configured to:
parse code of an application stored on the computing device to detect a first instruction configured to initiate a request for the system function;
determine a location in the code of the application to be patched to reference the modified index number;
an application execution controller configured to suspend the application; and
a patcher configured to patch the application to reference the modified index number,
the application execution controller further configured to resume the application after said patching is completed.

8. The system of claim 7, wherein the hooking function is generated at a system call entry point at which a context of the one or more processing units of the computing device, that executes the operating system, switches from user mode to kernel mode.

9. The system of claim 7, wherein said code parser is further configured to:
analyze a portion of the code of the application that precedes the first instruction to determine a second instruction that specifies the unmodified version of the index number; and
determine a location of the second instruction.

10. The system of claim 9, wherein said patcher is further configured to:
replace the unmodified version of the index number specified by the second instruction with the modified index number.

11. The system of claim 7, wherein the random seed generator is further configured to:
generate a second random seed after a predetermined period of time expires; and
wherein the system morpher is further configured to:
modify the index number corresponding to the system function based on the second random seed.

12. The system of claim 7, wherein the unmodified version of the index number of the shadow system call table is further associated with a logging function that is configured to collect information associated with an application that is caused to reference the shadow system call table by the hooking function.

13. A computer-readable storage medium having program instructions recorded thereon that, when executed by a processor of a computing device, perform the method of any one of claims 1 to 6.

## Patentansprüche

1. Verfahren in einer Rechenvorrichtung, umfassend:
Erzeugen (602) eines Ausgangswerts;
Modifizieren (604) einer Indexnummer, welcher einer Systemfunktion entspricht, welche von einem Betriebssystem bereitgestellt und von einer Systembibliothek des Betriebssystems verwaltet wird, basierend auf dem Ausgangswert;
Duplizieren (606) einer von dem Betriebssystem bereitgestellten Original-Systemaufruftabelle, um eine Schatten-Systemaufruftabelle zu erzeugen, wobei die Original-Systemaufruftabelle und die Schatten-Systemaufruftabelle jeweils eine unmodifizierte Version der Indexnummer mit einem Funktionszeiger verknüpfen, welcher auf die Systemfunktion verweist;
Modifizieren (608) der Original-Systemaufruftabelle, um die unmodifizierte Version der Indexnummer mit einem Funktionszeiger, welcher auf eine Trap-Funktion verweist, anstatt mit dem Funktionszeiger, welcher auf die Systemfunktion verweist, zu verknüpfen; und
Erzeugen (610) einer Hook-Funktion, welche:
Code, welcher den Aufruf einer Systemfunktion mit der modifizierten Indexnummer ausgibt, veranlasst, die Schatten-Systemaufruftabelle zu verwenden, wodurch die Ausführung der Systemfunktion veranlasst wird; und
Code, welcher den Aufruf einer Systemfunktion mit der unmodifizierten Version der Indexnummer ausgibt, veranlasst, die Original-Systemaufruftabelle zu verwenden, wodurch die Ausführung der Trap-Funktion veranlasst wird, wobei die Trap-Funktion dazu konfiguriert ist, den Code zu neutralisieren, welcher den Aufruf der Systemfunktion mit der unmodifizierten Version der Indexnummer ausgibt;
Parsen von Code einer auf der Rechenvorrichtung gespeicherten Anwendung, um eine erste Anweisung zu erkennen, welche zum Initiieren einer Anforderung für die Systemfunktion konfiguriert ist;
Bestimmen einer Stelle im Code der zu korrigierenden Anwendung, um auf die modifizierte Indexnummer zu verweisen;
Pausieren der Anwendung;
Korrigieren der Anwendung, um auf die modifizierte Indexnummer zu verweisen; und Fortsetzen der Anwendung, nachdem das Korrigieren abgeschlossen ist.

2. Verfahren nach Anspruch 1, wobei die Hook-Funktion an einem Systemaufruf-Einstiegspunkt erzeugt wird, an welchem ein Kontext eines Prozessors der Rechenvorrichtung, welche das Betriebssystem ausführt, vom Benutzermodus in den Kernelmodus wechselt.

3. Verfahren nach Anspruch 1, wobei das Bestimmen umfasst:
Analysieren eines Abschnitts des Codes der Anwendung, welcher der ersten Anweisung vorausgeht, um eine zweite Anweisung zu bestimmen, welche die unmodifizierte Version der Indexnummer angibt; und
Bestimmen einer Stelle der zweiten Anweisung.

4. Verfahren nach Anspruch 3, wobei das Korrigieren umfasst:
Ersetzen der unmodifizierten Version der durch die zweite Anweisung angegebenen Indexnummer durch die modifizierte Indexnummer.

5. Verfahren nach Anspruch 1, weiter umfassend:
Erzeugen eines zweiten Ausgangswerts nach Ablauf einer vorbestimmten Zeitspanne; und
Modifizieren der Indexnummer, welche der Systemfunktion entspricht, basierend auf dem zweiten Ausgangswert.

6. Verfahren nach Anspruch 1, wobei die unmodifizierte Version der Indexnummer der Schatten-Systemaufruftabelle weiter mit einer Protokollfunktion verknüpft ist, welche dazu konfiguriert ist, Informationen zu sammeln, welche mit einer Anwendung verknüpft sind, welche durch die Hook-Funktion dazu veranlasst wird, auf die Schatten-Systemaufruftabelle zu verweisen.

7. System (100), umfassend:
eine oder mehrere Verarbeitungseinheiten (102, 1006); und
einen Speicher (104, 1008), welcher mit der einen oder den mehreren Verarbeitungseinheiten (102, 1006) gekoppelt ist, wobei der Speicher (104, 1008) Programmcode zur Ausführung durch die eine oder die mehreren Verarbeitungseinheiten (102, 1006) speichert, wobei der Programmcode umfasst:
einen Ausgangswertgenerator (304), welcher dazu konfiguriert ist:
einen Ausgangswert zu erzeugen; und
einen Systemmorpher (306), welcher dazu konfiguriert ist:
eine Indexnummer zu modifizieren, welche einer Systemfunktion entspricht, welche von einem Betriebssystem (110) bereitgestellt und von einer Systembibliothek des Betriebssystems (110) verwaltet wird, basierend auf dem Ausgangswert;
eine von dem Betriebssystem (110) bereitgestellte Original-Systemaufruftabelle (322) zu duplizieren, um eine Schatten-Systemaufruftabelle (302) zu erzeugen, wobei die Original-Systemaufruftabelle (322) und die Schatten-Systemaufruftabelle (302) jeweils eine unmodifizierte Version der Indexnummer mit einem Funktionszeiger verknüpfen, welcher auf die Systemfunktion verweist;
die Original-Systemaufruftabelle zu modifizieren, um die unmodifizierte Version der Indexnummer mit einem Funktionszeiger, welcher auf eine Trap-Funktion verweist, anstatt mit dem Funktionszeiger, welcher auf die Systemfunktion verweist, zu verknüpfen; und
eine Hook-Funktion (328) zu erzeugen, welche:
Code, welcher den Aufruf einer Systemfunktion mit der modifizierten Indexnummer ausgibt, veranlasst, die Schatten-Systemaufruftabelle (302) zu verwenden, wodurch die Ausführung der Systemfunktion veranlasst wird; und
Code, welcher den Aufruf einer Systemfunktion mit der unmodifizierten Version der Indexnummer ausgibt, veranlasst, die Original-Systemaufruftabelle (322) zu verwenden, wodurch die Ausführung der Trap-Funktion veranlasst wird, wobei die Trap-Funktion dazu konfiguriert ist, den Code zu neutralisieren, welcher den Aufruf der Systemfunktion mit der unmodifizierten Version der Indexnummer ausgibt;
einen Code-Parser, welcher dazu konfiguriert ist:
Code einer auf der Rechenvorrichtung gespeicherten Anwendung zu parsen, um eine erste Anweisung zu erkennen, welche zum Initiieren einer Anforderung für die Systemfunktion konfiguriert ist;
eine Stelle im Code der zu korrigierenden Anwendung zu bestimmen, um auf die modifizierte Indexnummer zu verweisen;
eine Anwendungsausführungssteuereinheit, welche dazu konfiguriert ist, die Anwendung zu pausieren; und
einen Patcher, welcher dazu konfiguriert ist, die Anwendung zu korrigieren, um auf die modifizierte Indexnummer zu verweisen, wobei die Anwendungsausführungssteuereinheit weiter dazu konfiguriert ist, die Anwendung nach Abschluss des Korrigierens fortzusetzen.

8. System nach Anspruch 7, wobei die Hook-Funktion an einem Systemaufruf-Einstiegspunkt erzeugt wird, an welchem ein Kontext der einen oder mehreren Verarbeitungseinheiten der Rechenvorrichtung, welche das Betriebssystem ausführt, vom Benutzermodus in den Kernelmodus wechselt.

9. System nach Anspruch 7, wobei der Code-Parser weiter dazu konfiguriert ist:
einen Abschnitt des Codes der Anwendung zu analysieren, welcher der ersten Anweisung vorausgeht, um eine zweite Anweisung zu bestimmen, welche die unmodifizierte Version der Indexnummer angibt; und
eine Stelle der zweiten Anweisung zu bestimmen.

10. System nach Anspruch 9, wobei der Patcher weiter dazu konfiguriert ist:
die unmodifizierte Version der durch die zweite Anweisung angegebenen Indexnummer durch die modifizierte Indexnummer zu ersetzen.

11. System nach Anspruch 7, wobei der Ausgangswertgenerator weiter dazu konfiguriert ist:
nach Ablauf einer vorbestimmten Zeitspanne einen zweiten Ausgangswert zu erzeugen; und
wobei der Systemmorpher weiter dazu konfiguriert ist:
die Indexnummer, welche der Systemfunktion entspricht, basierend auf dem zweiten Ausgangswert zu modifizieren.

12. System nach Anspruch 7, wobei die unmodifizierte Version der Indexnummer der Schatten-Systemaufruftabelle weiter mit einer Protokollfunktion verknüpft ist, welche dazu konfiguriert ist, Informationen zu sammeln, welche mit einer Anwendung verknüpft sind, welche durch die Hook-Funktion dazu veranlasst wird, auf die Schatten-Systemaufruftabelle zu verweisen.

13. Computerlesbares Speichermedium mit darauf aufgezeichneten Programmanweisungen, welche, wenn durch einen Prozessor einer Rechenvorrichtung ausgeführt, das Verfahren nach einem der Ansprüche 1 bis 6 durchführen.

## Revendications

1. Procédé dans un dispositif informatique comprenant :
la génération (602) d'une graine aléatoire ;
la modification (604) d'un numéro d'index correspondant à une fonction système fournie par un système d'exploitation, et maintenue par une bibliothèque système du système d'exploitation, sur la base de la graine aléatoire ;
la duplication (606) d'une table d'appels de système d'origine fournie par le système d'exploitation pour générer une table d'appels de système fantôme, la table d'appels de système d'origine et la table d'appels de système fantôme associant chacune une version non modifiée du numéro d'index à un pointeur de fonction qui référence la fonction système ;
la modification (608) de la table d'appels de système d'origine pour associer la version non modifiée du numéro d'index à un pointeur de fonction qui référence une fonction piège au lieu du pointeur de fonction qui référence la fonction système ; et
la génération (610) d'une fonction d'accrochage qui :
fait en sorte que le code émettant un appel de fonction système avec le numéro d'index modifié utilise la table d'appels de système fantôme, provoquant ainsi l'exécution de la fonction système ; et
fait en sorte que le code émettant un appel de fonction système avec la version non modifiée du numéro d'index utilise la table d'appels de système d'origine, provoquant ainsi l'exécution de la fonction piège, la fonction piège étant configurée pour neutraliser le code qui émet l'appel de fonction système avec la version non modifiée du numéro d'index ;
l'analyse du code d'une application stockée sur le dispositif informatique pour détecter une première instruction configurée pour lancer une demande pour la fonction système ;
la détermination d'un emplacement dans le code de l'application à corriger pour référencer le numéro d'index modifié ;
la suspension de la demande ;
la correction de l'application pour référencer le numéro d'index modifié ; et la reprise de l'application après que ladite correction est terminée.

2. Procédé selon la revendication 1, dans lequel la fonction d'accrochage est générée à un point d'entrée d'appel système auquel un contexte d'un processeur du dispositif informatique, qui exécute le système d'exploitation, passe du mode utilisateur au mode noyau.

3. Procédé selon la revendication 1, dans lequel ladite détermination comprend :
l'analyse d'une partie du code de l'application qui précède la première instruction pour déterminer une seconde instruction qui spécifie la version non modifiée du numéro d'index ; et
la détermination d'un emplacement de la seconde instruction.

4. Procédé selon la revendication 3, dans lequel ladite correction comprend :
le remplacement de la version non modifiée du numéro d'index spécifié par la seconde instruction par le numéro d'index modifié.

5. Procédé selon la revendication 1, comprenant en outre :
la génération d'une seconde graine aléatoire après qu'une période de temps prédéterminée expire ; et
la modification du numéro d'index correspondant à la fonction système sur la base de la seconde graine aléatoire.

6. Procédé selon la revendication 1, dans lequel la version non modifiée du numéro d'index de la table d'appels de système fantôme est en outre associée à une fonction de journalisation qui est configurée pour collecter des informations associées à une application qui est amenée à référencer la table d'appels de système fantôme par la fonction d'accrochage.

7. Système (100) comprenant :
une ou plusieurs unités de traitement (102, 1006) ; et
une mémoire (104, 1008) couplée aux une ou plusieurs unités de traitement (102, 1006), la mémoire (104, 1008) stockant un code de programme destiné à être exécuté par les une ou plusieurs unités de traitement (102, 1006), le code de programme comprenant :
un générateur de graine aléatoire (304) configuré pour :
générer une graine aléatoire ; et
un morpheur système (306) configuré pour :
modifier un numéro d'index correspondant à une fonction système fournie par un système d'exploitation (110), et maintenue par une bibliothèque système du système d'exploitation (110), sur la base de la graine aléatoire ;
dupliquer une table d'appels de système d'origine (322) fournie par le système d'exploitation (110) pour générer une table d'appels de système fantôme (302), la table d'appels de système d'origine (322) et la table d'appels de système fantôme (302) associant chacune une version non modifiée du numéro d'index à un pointeur de fonction qui référence la fonction système ;
modifier la table d'appels de système d'origine pour associer la version non modifiée du numéro d'index à un pointeur de fonction qui référence une fonction d'interruption au lieu du pointeur de fonction qui référence la fonction système ; et
générer une fonction d'accrochage (328) qui :
fait en sorte que le code émettant un appel de fonction système avec le numéro d'index modifié utilise la table d'appels de système fantôme (302), provoquant ainsi l'exécution de la fonction système ; et
fait en sorte que le code émettant un appel de fonction système avec la version non modifiée du numéro d'index utilise la table d'appels de système d'origine (322), provoquant ainsi l'exécution de la fonction piège, la fonction piège étant configurée pour neutraliser le code qui émet l'appel de fonction système avec la version non modifiée du numéro d'index ;
un analyseur de code configuré pour :
analyser le code d'une application stockée sur le dispositif informatique pour détecter une première instruction configurée pour lancer une demande pour la fonction système ;
déterminer un emplacement dans le code de l'application à corriger pour référencer le numéro d'index modifié ;
un dispositif de commande d'exécution d'application configuré pour suspendre l'application ; et
un programme de correction configuré pour corriger l'application pour référencer le numéro d'index modifié, le dispositif de commande d'exécution d'application étant en outre configuré pour reprendre l'application après que ladite correction est terminée.

8. Système selon la revendication 7, dans lequel la fonction d'accrochage est générée à un point d'entrée d'appel système auquel un contexte des une ou plusieurs unités de traitement du dispositif informatique, qui exécute le système d'exploitation, passe du mode utilisateur au mode noyau.

9. Système selon la revendication 7, dans lequel ledit analyseur de code est en outre configuré pour :
analyser une partie du code de l'application qui précède la première instruction pour déterminer une seconde instruction qui spécifie la version non modifiée du numéro d'index ; et
déterminer un emplacement de la seconde instruction.

10. Système selon la revendication 9, dans lequel ledit programme de correction est en outre configuré pour :
remplacer la version non modifiée du numéro d'index spécifié par la seconde instruction par le numéro d'index modifié.

11. Système selon la revendication 7, dans lequel le générateur de graine aléatoire est en outre configuré pour :
générer une seconde graine aléatoire après qu'une période de temps prédéterminée expire ; et
dans lequel le morpheur système est en outre configuré pour :
modifier le numéro d'index correspondant à la fonction système sur la base de la seconde graine aléatoire.

12. Système selon la revendication 7, dans lequel la version non modifiée du numéro d'index de la table d'appels du système fantôme est en outre associée à une fonction de journalisation qui est configurée pour collecter des informations associées à une application qui est amenée à référencer la table d'appels du système fantôme par la fonction d'accrochage.

13. Support de stockage lisible par ordinateur sur lequel sont enregistrées des instructions de programme qui, lorsqu'elles sont exécutées par un processeur d'un dispositif informatique, réalisent le procédé selon l'une quelconque des revendications 1 à 6.
